# FASCICULE DE BREVET EUROPEEN

(11) **EP 2 930 645 B1**
(45) Date de publication et mention de la délivrance du brevet: **04.08.2021**
(21) Numéro de dépôt: 15160918.7
(22) Date de dépôt: 25.03.2015
(51) Int. Cl.: G06F 21/62

(54) **PROCÉDÉ DE GESTION D'UN CONTROLE D'ACCÉS À UN SERVICE**
VERWALTUNGSVERFAHREN DER ZUGANGSKONTROLLE ZU EINEM DIENST
METHOD FOR MANAGING ACCESS CONTROL TO A SERVICE

(30) Priorité: 28.03.2014 FR 1452764
(43) Date de publication de la demande: 14.10.2015
(73) Titulaire: Evidian, 78340 Les Clayes sous Bois (FR)
(72) Inventeur: Jeandel, Francis, 78160 Marly Le Roi (FR)
(74) Mandataire: Cabinet Camus Lebkiri

(56) Documents cités:
- US-A- 5 911 143
- US-A1- 2013 024 909
- US-A1- 2013 111 562
- A. Abou El Kalam ET AL: "Organization based access control", POLICY '03 Proceedings of the 4th IEEE International Workshop on Policies for Distributed Systems and Networks, 6 juin 2003 (2003-06-06), pages 1-12, XP055065287, Extrait de l'Internet: URL:http://ieeexplore.ieee.org/ielx5/8577/ 27164/01206966.pdf?tp=&arnumber=1206966&is number=27164 [extrait le 2013-06-04]
- DIALA ABI HAIDAR ET AL: "An extended RBAC profile of XACML", PROCEEDINGS OF THE 3RD ACM WORKSHOP ON SECURE WEB SERVICES , SWS '06, 1 janvier 2006 (2006-01-01), page 13, XP055154565, New York, New York, USA DOI: 10.1145/1180367.1180372 ISBN: 978-1-59-593546-5
- None

## Description

### DOMAINE TECHNIQUE DE L'INVENTION

La présente invention concerne un procédé de gestion d'un contrôle d'accès à un service.

Elle trouve une application particulière mais non limitative dans le domaine de la gestion de données d'un système informatique.

### ARRIERE-PLAN TECHNOLOGIQUE DE L'INVENTION

Dans le domaine de la gestion de données d'un système informatique, avant d'exécuter une action demandée par un utilisateur, on doit s'assurer que cet utilisateur est bien autorisé à effectuer l'action demandée.

Cette étape qui consiste à vérifier les droits de l'utilisateur par rapport à l'action demandée est appelée « autorisation ». Au préalable on s'est assuré de l'identité du demandeur par un mécanisme d' « authentification ».

Les règles d'autorisation sont définies par des politiques de contrôle d'accès. La définition des politiques se fait habituellement à l'aide d'outils d'administration qui utilisent un modèle de données structurant pour aider (forcer) à l'écriture de politiques cohérentes et exemptes d'erreurs.

Le modèle RBAC « Role-Based Access Control » a été largement adopté par les administrateurs de sécurité car il est simple et effectif.

Basé sur ce modèle, un système informatique comprend un nombre de données important dont notamment des données représentatives :
- des utilisateurs du système ;
- de permissions attribuées à des rôles pour effectuer des actions ;
- de rôles attribués aux utilisateurs.

Cependant, lorsque l'on met en œuvre un contrôle d'accès précis, on est amené à multiplier le nombre de rôles, à tel point qu'il n'est pas exceptionnel de rencontrer des situations où le nombre de rôles est supérieur au nombre d'utilisateurs. Ceci complique la gestion des rôles et augmente le risque d'erreurs, et donc affaiblit la sécurité. La demande de brevets US5,911,143A divulgue un système de contrôle d'accès utilisant des rôles types hierarchisées et organisés selon des unités d'organisation hiérarchiques.

### DESCRIPTION GENERALE DE L'INVENTION

La présente invention a pour but un procédé de gestion d'un contrôle d'accès à un service d'un système informatique qui permettent de gérer de façon efficace le problème de sécurité mentionné ci-dessus.

Selon un premier aspect de l'invention, ce but est atteint par un procédé de gestion d'un contrôle d'accès à un service d'un système de gestion informatique selon la revendication indépendante 1.

Comme on va le voir en détail par la suite, en ajoutant une classe d'objets supplémentaire, à savoir les organisations, qui est utilisée pour qualifier les rôles, on réduit drastiquement le nombre de rôles et on effectue une gestion de contrôle d'accès basée sur une double hiérarchie.

Selon des modes de réalisation non limitatifs, le procédé peut comporter en outre une ou plusieurs caractéristiques supplémentaires parmi les suivantes :
- Le procédé comporte en outre une étape supplémentaire de transcrire en un langage utilisant des expressions régulières :
   - les premières relations auxquelles sont assignées des organisations hiérarchiques ;
   - les deuxièmes relations auxquelles sont assignées des organisations hiérarchiques ;
   - un jeu de politiques associé à chaque service du système de gestion informatique.
- Le langage de transcription utilisé est XACML.

En outre, il est également proposé un système de gestion informatique selon la revendication 6.

Selon un mode de réalisation non limitatif du système de gestion informatique, le module de gestion de la politique de sécurité comprend en outre un module de transcription en un langage utilisant des expressions régulières:
- de premières relations auxquelles sont assignées des organisations hiérarchiques ;
- de deuxièmes relations auxquelles sont assignées des organisations hiérarchiques ;
- un jeu de politiques associé à chaque service du système de gestion informatique.

En outre, il est également proposé un module de gestion de la politique de sécurité d'un système de gestion informatique selon la revendication 4.

En outre, il est également proposé un serveur d'autorisation d'un système de gestion informatique selon la revendication 5.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- La Fig. 1 est un premier organigramme d'un mode de réalisation non limitatif d'un procédé de gestion de contrôle d'accès selon l'invention ;
- La Fig. 2 est un schéma d'un modèle de données RBAC classique comprenant des rôles, permissions, et des organisations sur lequel est basé un modèle de données RBAC hiérarchique étendu, modèle utilisé par le procédé de la Fig. 1 ;
- La Fig. 3a est un schéma d'un modèle de données RBAC hiérarchique étendu comprenant des hiérarchies de rôles, permissions, et des hiérarchies d'organisations, modèle utilisé par le procédé de la Fig. 1 ;
- La Fig. 3b est un schéma d'un exemple non limitatif de référentiel basé sur le modèle de données RBAC hiérarchique étendu comprenant des hiérarchies de rôles, permissions, et des hiérarchies d'organisations, modèle utilisé par le procédé de la Fig. 1 ;
- La Fig. 4 est un exemple non limitatif de graphe de rôles hiérarchiques d'un modèle de données RBAC hiérarchique étendu, modèle utilisé par le procédé de la Fig. 1 ;
- La Fig. 5 est un exemple non limitatif de graphe d'organisations hiérarchiques d'un modèle de données RBAC hiérarchique étendu, modèle utilisé par le procédé de la Fig. 1 ; et
- La Fig. 6 représente schématiquement un système de gestion de contrôle d'accès permettant de mettre en œuvre le procédé de la Fig. 1.

### DESCRIPTION DES FORMES DE REALISATION PREFEREES DE L'INVENTION

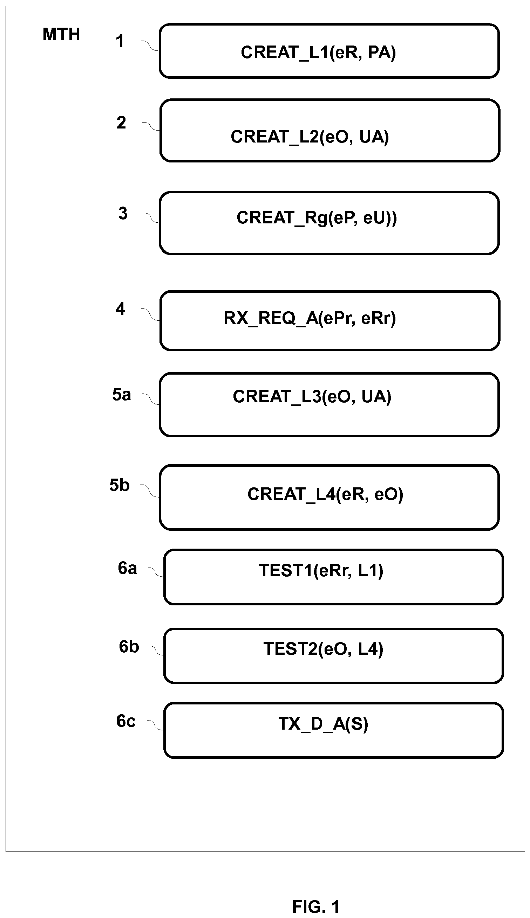

Le procédé de gestion de contrôle d'accès MTH selon l'invention est décrit dans un mode de réalisation non limitatif à la Fig. 1.

Le procédé étant mis en œuvre à l'aide d'un référentiel REF comprenant :
- des données utilisateur eU ;
- des données rôle eR organisée selon une première hiérarchie h1 ;
- des données permission eP ;
- des données organisation eO organisée selon une deuxième hiérarchie h2 ;
- des données représentatives de :
   ▪ au moins une première relation UA (User-Assignation) dans laquelle une donnée utilisateur eU est associée à une donnée rôle eR dans une donnée organisation eO ;
   ▪ au moins une deuxième relation PA dans laquelle une donnée rôle eR est associée à une donnée permission eP et à une donnée organisation eO.

Il comprend les étapes de :
- pour chaque deuxième relation PA, définir une première liste L1 comprenant les données rôle eR du référentiel REF qui sont hiérarchiquement supérieures à la donnée rôle eR de la deuxième relation PA (étape illustrée CREAT_L1 (eR, PA)) ;
- pour chaque première relation UA, définir une deuxième liste L2 comprenant les données organisation eO du référentiel REF qui héritent de la donnée organisation eO de la première relation UA (étape illustrée CREAT_L2(eO, UA)) ;
- définir une règle Rg qui associe la donnée permission eP de la deuxième liste L2 de ladite deuxième relation PA pour accéder audit service S à une donnée utilisateur eU si ladite donnée utilisateur eU est associée à une donnée rôle de la première liste L1 dans une quelconque des données organisation eO de la deuxième liste L2 (étape illustrée CREAT_Rg(eP, eU)) ;
- pour chaque première relation UA :
   - définir une troisième liste L3 comprenant les données organisation eO d'ordres hiérarchiques supérieures à la donnée organisation eO de ladite première relation UA (étape illustrée CREAT_L3(eO, UA)) ;
   - définir une quatrième liste L4 dans laquelle on associe la donnée rôle eR de ladite première relation UA à chaque donnée organisation eO de la troisième liste L3 (étape illustrée CREAT_L4(eR, eO)) ;
- recevoir une requête d'accès REQ_A à un service S par le système informatique SYS, ladite requête d'accès REQ_A comprenant une donnée permission ePr et une donnée rôle eRr (étape illustrée RX_REQ_A(ePr, eRr)) ;
- pour chaque règle Rg précédemment définie :
   - tester si la donnée rôle eRr de la requête d'accès REQ_A appartient à la première liste L1 (étape illustrée TEST1 (eRr, L1)) ; et
   - tester si la donnée organisation eO de ladite règle Rg appartient à la quatrième liste L4 (étape illustrée TEST2(eO, L4)) ;
   - si l'un des deux tests est positif, autoriser l'accès audit service S (étape décrite précédemment TX_D_A(S)).

Dans la suite de la description, par souci de simplification :
- les termes données utilisateurs ou utilisateurs seront utilisés de manière indifférenciée ;
- les termes données permissions ou permissions seront utilisés de manière indifférenciée ;
- les termes données rôles ou rôle seront utilisés de manière indifférenciée ;
- les termes données organisations ou organisation seront utilisés de manière indifférenciée ;
- les termes services ou ressources seront utilisés de manière indifférenciée ;
- les termes permissions, droits d'accès, autorisations seront utilisés de manière indifférenciée.

Dans la suite de la description, par service, on entend une ressource ou, une application. Par ressource, on entend un élément d'un système informatique nécessaire à l'exécution d'une tâche ou d'un programme. Dans des exemples non limitatifs, ces ressources sont une mémoire vive, des fichiers, une imprimante, un lecteur de disque etc.

Dans la suite de la description, les termes requête d'accès, requête d'autorisation, requête de demande d'accès seront utilisés de manière indifférenciée.

Le procédé de gestion de contrôle d'accès est mis en œuvre dans un système de gestion informatique SYS comprenant :
- des services S ;
- un module de gestion de la politique de sécurité PAP ;
- un serveur d'autorisation PDP ;
- un module d'émission de requêtes d'autorisation PEP.

Ces composants sont décrits plus loin dans la description.

Le procédé de gestion de contrôle d'accès se base sur un modèle de données RBAC hiérarchique étendu, ce dernier se basant sur un modèle RBAC classique. Ce modèle RBAC définit des entités (utilisateur, rôle, permission, organisation) et des relations entres ces entités ainsi que des hiérarchies entre des rôles et entre des organisations. Les autorisations d'accès appelées également permissions eP ne sont pas données directement aux utilisateurs, mais à des rôles eR qui représentent les fonctions que peut occuper un utilisateur.

Pour la suite de la description, on appelle :
- modèle RBAC classique ou de base un modèle RBAC basé sur des entités utilisateur, rôle, permission ;
- modèle RBAC hiérarchique, un modèle RABC basé le modèle RBAC classique et qui prend en compte en outre des hiérarchies entre les rôles ;
- modèle RBAC hiérarchique étendu, un modèle RABC basé sur le modèle RBAC hiérarchique et qui ajoute le concept d'organisations et une hiérarchie entre ces organisations.

Par permission (ou autorisation), on entend le droit d'exécuter une opération sur une ressource.

Par organisation, on entend une unité organisationnelle, tel que dans des exemples non limitatifs, un groupe, un département, un service d'une entreprise ou un projet horizontal auquel participe des personnes de plusieurs services, etc.

Par rôle, on entend un profil métier d'un utilisateur. Par profil métier, on entend un attribut métier associé à un utilisateur pour caractériser son activité (sa fonction).

Par utilisateur, on entend une personne employée de l'organisation, que ce soit de façon temporelle ou définitive.

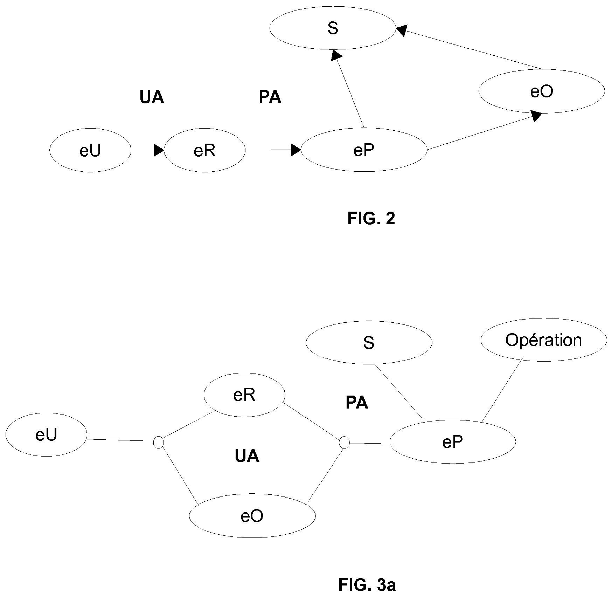

Le schéma à la Fig. 2 montre les relations entres les données du modèle RBAC.

Le lien entre une donnée permission eP et une donnée rôle eR est appelé assignation d'une permission PA.

Le lien entre une donnée utilisateur eU et une donnée rôle eR est appelé assignation d'un utilisateur UA. On notera qu'une donnée utilisateur peut comporter plusieurs liens avec des données rôles puisqu'un utilisateur peut avoir plusieurs fonctions dans une entreprise par exemple.

Le modèle RBAC étendu comporte en outre une donnée organisation tel qu'illustré sur la Fig. 3a.

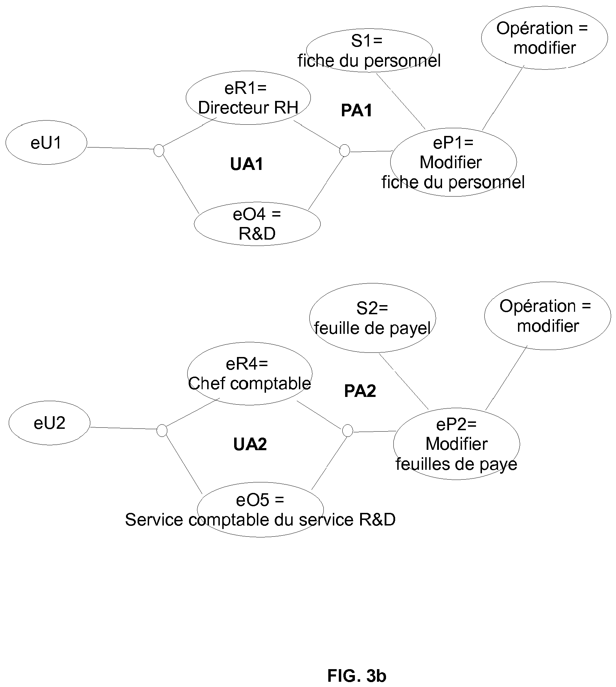

Ainsi, dans un exemple non limitatif illustré à la Fig. 3b, un référentiel REF basé sur le modèle de données RBAC hiérarchique étendu comporte :
- une première relation UA1 dans laquelle un premier utilisateur eU1 est associée au rôle eR1 directeur des ressources humaines RH dans l'organisation eO4 service recherche et développement (R&D en abrégé).
- une première relation UA2 dans laquelle un deuxième utilisateur eU2 est associé au rôle eR4 chef comptable dans l'organisation eO5 service comptable du service R&D.
- une deuxième relation PA1 dans laquelle le rôle eR1 directeur des ressources humaines est associé à la permission eP1 mettre à jour une fiche du personnel, une fiche du personnel représentant un premier service S1 ;
- une deuxième relation PA2 dans laquelle le rôle eR4 chef comptable est associé à la permission eP2 modifier les feuilles de paye, une feuille de paye représentant un deuxième service S2.

Le modèle RBAC hiérarchique étendu utilisé par le procédé de gestion permet en outre de composer un rôle eR à partir d'autres rôles. Ainsi il est possible de décider qu'un rôle eR va hériter des droits d'accès (ou permissions) d'un ou plusieurs autres rôles en plus des droits qui lui sont propres. Le rôle qui hérite est appelé « senior », les rôles dont il hérite sont des « juniors ».

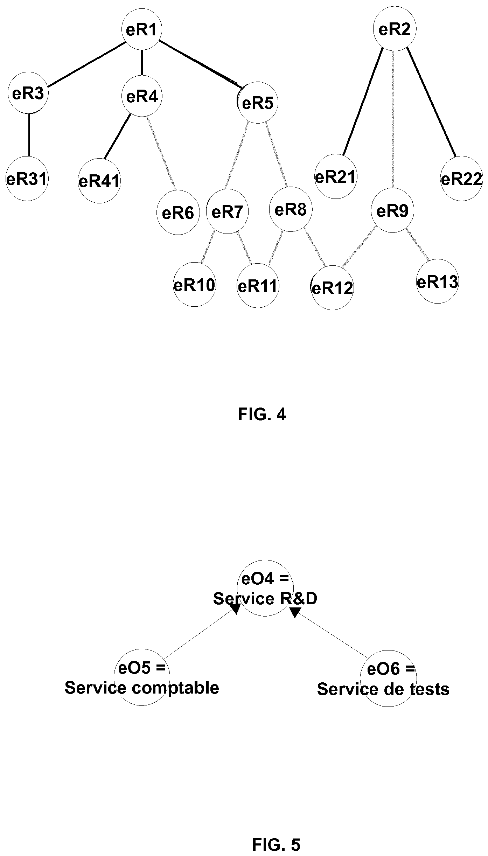

Les données rôles qui héritent sont les données rôles supérieures. Comme illustré sur la Fig. 4, les relations entre rôles sont représentées de manière graphique. Par convention les rôles les plus puissants, les rôles seniors, sont positionnés plus haut que leurs rôles juniors sur les schémas. Le graphe représenté a une structure de graphe orienté acyclique.

Ainsi, par exemple le rôle eR4 hérite du rôle eR1 et les rôles eR41 et eR6 héritent du rôle eR4.

Ainsi, dans l'exemple non limitatif décrit, l'utilisateur qui a pour rôle directeur des ressources humaines eR1 hérite du rôle eR4 chef comptable eR4. Il hérite donc de la permission eP2 associée au rôle eR4, il peut donc modifier les feuilles de paye.

Pour éviter la multiplication des rôles, le modèle RBAC étendu comporte une entité supplémentaire. Dans ce document cette entité est une organisation eO. Les assignations UA et PA deviennent relatives à une organisation. Les relations d'héritage entre rôles restent indépendantes des organisations.

Les données organisations sont représentées dans une arborescence. Elles sont les nœuds de cette arborescence, tel qu'illustré à la Fig. 2. On notera que deux organisations peuvent avoir le même nom à condition d'être sous des nœuds différents.

Dans un mode de réalisation non limitatif, une organisation peut hériter d'une autre organisation. Par héritage, on entend qu'une assignation relative à une donnée organisation est étendue aux sous-organisations (extension à toute l'arborescence sous le nœud de ladite organisation).

L'héritage aux sous-organisations peut être activé pour les UA et/ou les PA.

Les données organisation qui héritent sont les données organisation inférieures.

Comme illustré sur la Fig. 5, les relations entre organisations sont représentées de manière graphique. Par convention les organisations les plus puissants, les rôles seniors, sont positionnés plus haut que les organisations juniors sur les schémas.

Ainsi, dans un exemple non limitatif, l'organisation eO5 du service comptable de la recherche et développement hérite de l'organisation du département recherche et développement eO4.

Ainsi, les étapes du procédé de gestion d'un contrôle d'accès à un service sont décrites en détail ci-après en se référant aux figures.

On notera que ces étapes sont effectuées pour chaque deuxième relation PA.

Ainsi, dans l'exemple pris, le procédé commence par la relation PA2 (chef comptable, modifier les feuilles de paye).

### • Création de la politique.

**Dans une première étape 1),** pour chaque deuxième relation PA, le module PAP définit une première liste L1 comprenant les données rôle eR du référentiel REF qui sont hiérarchiquement supérieures à la donnée rôle eR de la deuxième relation PA (étape illustrée CREAT_L1(eR, PA)).

Ainsi, pour chaque PA, une donnée rôle hérite de la permission d'une donnée rôle inférieure.

Ainsi dans l'exemple non limitatif pris, pour la deuxième relation PA2, la première liste L1 comprend le rôle eR1 puisque le rôle eR1 directeur RH est hiérarchiquement supérieur au rôle eR4 chef comptable auquel est associée la relation PA2.

Ainsi pour la relation PA2, le directeur RH hérite de la permission eP2 modifier les feuilles de paye.

Pour la relation PA1, la liste L1 est vide.

On rappelle que les données rôles qui héritent sont les données rôles supérieures.

Cette première liste L1 est stockée dans une mémoire, par exemple RAM, du module PAP.

**Dans une deuxième étape 2),** pour chaque première relation UA, le module PAP définit une deuxième liste L2 comprenant les données organisation eO du référentiel REF qui héritent de la donnée organisation eO de la première relation UA (étape illustrée CREAT_L2(eO, UA)) ;
Ainsi, pour chaque UA, une donnée rôle hérite de l'organisation d'une donnée rôle inférieure.

Ainsi dans l'exemple non limitatif pris, pour la première relation UA1, la deuxième liste L2 comprend l'organisation eO5 service comptable qui hérite de l'organisation eO4 service R&D de ladite première relation UA1. Elle comprend également l'organisation dont on hérite, à savoir ici le service R&D. Ainsi, pour la première relation UA1, le rôle directeur RH hérite de l'organisation service comptable du rôle inférieur chef comptable.

Pour la relation UA2, la deuxième liste est vide dans l'exemple non limitatif pris.

On rappelle que les données organisation qui héritent sont les données organisation inférieures.

Cette deuxième liste L2 est stockée dans une mémoire, par exemple RAM, du module PAP.

**Dans une troisième étape 3)**, le module PAP définit une règle Rg qui associe la donnée permission eP de la deuxième liste L2 de ladite deuxième relation étudiée PA pour accéder audit service S à une donnée utilisateur eU si ladite donnée utilisateur eU est associée à une donnée rôle de la première liste L1 dans une quelconque des données organisation eO de la deuxième liste L2 (étape illustrée CREAT_Rg(eP, eU)).

Ainsi, dans l'exemple non limitatif décrit, on définit une règle Rg1 qui associe la permission eP2 « modifier les feuilles de paye » de la relation PA2 (chef comptable - modifier les feuilles de paye) à l'utilisateur eU dont le rôle associé est directeur RH de la liste L1 dans une quelconque des organisations de la liste L2, ici dans l'organisation service comptable du service R&D, soit e05.

Ainsi, dans l'exemple non limitatif décrit, si l'utilisateur eU est un directeur RH du service comptable du service R&D, on lui associe la permission « modifier les feuilles de paye ».

La règle Rg1 comprend ainsi les données eR1, eO5 et eP2.

Par contre, si l'utilisateur eU est un directeur RH du service achat, on ne lui associe pas la permission.

De même, si l'utilisateur eU est un acheteur du service comptable du service R&D, on ne lui associe pas la permission.

On rappelle que les informations utilisateur eU sont récupérées dans le référentiel de données REF.

Cette troisième liste L3 est stockée dans une mémoire, par exemple RAM, du module PAP.

### • Expression des rôles de l'utilisateur qui lance une requête de demande d'accès à un service S.

**Dans une quatrième étape 4),** le module PEP reçoit une requête d'accès REQ_A à un service S par le système informatique SYS, ladite requête d'accès REQ_A comprenant une donnée utilisateur (Ur), une donnée permission ePr et une donnée rôle eRr (étape illustrée RX_RQ(ePr, eRr)).

Dans un exemple non limitatif, la requête est envoyée par l'utilisateur Ur directeur RH du service comptable du service R&D. Cet utilisateur Ur demande à pouvoir modifier les feuilles de paye.

La requête Ur comprend donc les paramètres Ur, eRr = eR1 et ePr = eP2 et S1 = feuille de paye, opération = modifier.

Le module PEP transmet cette requête au module PDP.

Bien entendu, cette quatrième étape peut être effectuée en parallèle de l'une quelconque des étapes précédentes ou en amont.

**Dans une cinquième étape 5),** pour chaque première relation UA de la donnée utilisateur eR de la requête d'accès REQ_A (c'est-à-dire pour chaque assignation de l'utilisateur Ur à un rôle eR dans l'organisation eO, rôle eR et organisation eO de ladite première relation UA), on effectue les étapes suivantes :
**Dans une première sous étape 5a),** le module PDP définit une troisième liste L3 comprenant les données organisation eO d'ordres hiérarchiques supérieures à la donnée organisation eO de ladite première relation UA (étape illustrée CREAT_L3(eO, UA)). Cette sous-étape peut être faite en amont par le module PAP.

Ainsi, pour la relation UA3 qui associe le rôle eR1 directeur RH à l'utilisateur Ur source de la requête de demande d'accès à un service dans l'organisation eO5 service comptable du service R&D, la troisième liste L3 comprend l'organisation eO4 service R&D.

**Dans une deuxième sous étape 5b),** le module PDP définit une quatrième liste L4 dans laquelle on associe la donnée rôle eR de ladite première relation UA à chaque donnée organisation eO de la troisième liste L3 (étape illustrée CREAT_L4(eR, eO)).

On exprime ainsi que l'utilisateur Ur a le rôle dans chacune des organisations établies dans la liste L4.

Ainsi, pour la relation UA3 qui associe le rôle eR1 directeur RH à l'utilisateur Ur source de la requête de demande d'accès à un service dans l'organisation eO5 service comptable du service R&D, la quatrième liste L4 comprend l'association eR1-e04, soit directeur RH-service R&D.

Cette quatrième liste L4 est stockée dans une mémoire, par exemple RAM, du module PDP.

### • Contrôle d'accès.

**Dans une sixième étape 6),** pour chaque règle Rg définie précédemment, les étapes suivantes sont effectuées.

**Dans une première sous-étape 6a),** le module PDP teste si la donnée rôle eRr de la requête d'accès REQ_A appartient à la première liste L1 (étape illustrée TEST1 (eR, L1)).

On teste ainsi si le rôle eRr=eR1 appartient à la première liste. Dans l'exemple pris, c'est le cas. Si le test est négatif, on passe à la règle Rg suivante.

**Dans une deuxième sous-étape 6b),** le module PDP teste si la donnée organisation eO de ladite règle Rg appartient à la quatrième liste L4 (étape illustrée TEST2(eO, L4)).

On rappelle que la liste comporte : eR1-eO4 et que la règle Rg1 comporte l'organisation eO5.

Ce test est négatif.

**Dans une troisième sous-étape 6c),** si l'un des deux tests est positif, le module PDP autorise l'accès audit service S (étape illustrée TX_D_A(S)). Le premier test est positif, on autorise donc le directeur RH du service comptable du service R&D à modifier les feuilles de paye.

Le module PDP transmet l'autorisation d'accès D_A au module PEP qui lui-même la transmet à l'application dont est issue la demande utilisateur correspondant à la requête d'autorisation REQ_A.

### • Système informatique SYS

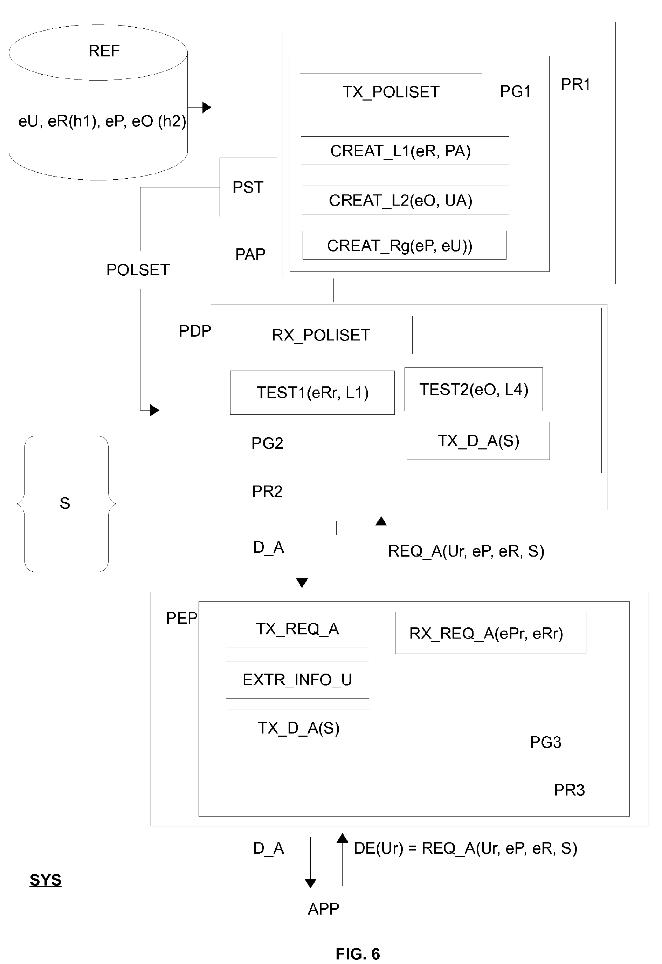

Le procédé est mis en œuvre dans un système informatique SYS illustré de façon schématique à la Fig. 6.

Ledit système est adapté pour coopérer avec ledit référentiel REF comprenant :
- des données utilisateur eU ;
- des données rôle eR organisée selon une première hiérarchie h1 ;
- des données permission eP ;
- des données organisation eO organisée selon une deuxième hiérarchie h2 ;
- des données représentatives de :
   ▪ au moins une première relation UA dans laquelle une donnée utilisateur eU est associée à une donnée rôle eR dans une donnée organisation eO ;
   ▪ au moins une deuxième relation PA dans laquelle une donnée rôle eR est associée à une donnée permission eP et une donnée organisation eO.

Le système de gestion informatique SYS comprend :
- un module de gestion de la politique de sécurité PAP. Ce module utilise le référentiel REF basé sur le modèle RBAC présenté précédemment. Il permet de définir les règles de la politique de sécurité (règles également appelées politiques de contrôle d'accès) qui doivent être appliquées. Il exécute notamment les étapes CREAT-L1 (eR, PA), CREAT_L2(eO, UA), CREAT_Rg(eP, eU) décrites précédemment.
   Le module est adapté pour envoyer les politiques de contrôle d'accès POLSET (ou règles de la politique de sécurité) au serveur d'autorisation PDP (étape TX_POLSET illustrée à la Fig. 6) ;
   Dans un mode de réalisation non limitatif, ce module PAP est un serveur.
- un module d'émission de requêtes d'autorisation PEP adapté pour :
   ∘ recevoir des requêtes d'accès REQ_A à un service par un utilisateur (étape RX_REQ_A(ePr, eRr) décrite précédemment) ;
   ∘ soumettre lesdites requêtes d'autorisation REQ_A à un serveur d'autorisation PDP, les requêtes d'autorisation REQ_A correspondant à une demande DE d'un utilisateur U d'accéder à un service S, ladite demande étant faite via une interface utilisateur d'une application APP (étape TX_REQ_A illustrée à la Fig. 6);
   ∘ extraire des informations sur un utilisateur donné (étape EXTR_INFO_U illustrée à la Fig. 6). Les informations sont dans un exemple non limitatif le nom et/ou les rôles de l'utilisateur. D'autres informations peuvent être également retirées telles que l'âge de l'utilisateur. Dans un exemple non limitatif, ces informations sont retirées d'un annuaire d'identité ou d'un composant du serveur d'autorisation comportant ces informations (non représenté) ;
   ∘ transmettre à l'application APP quelle est la décision D_A concernant la requête de demande d'accès : autorisation ou non (étape TX_D_A illustrée à la Fig. 6).
   Dans un mode de réalisation non limitatif, ce module PEP est un serveur.
- le serveur d'autorisation PDP adapté pour :
   ∘ obtenir les politiques de contrôle d'accès POLSET (ou règles de la politique de sécurité) auprès du module PAP (étape RX_POLSET illustrée à la Fig. 6) ;
      ∘ vérifier si la demande d'accès (appelée également requête d'autorisation) d'une requête utilisateur est conforme aux règles de la politique de sécurité (étapes TEST1(eRr, L1) et TEST2(eO, L4) décrites précédemment) ;
   ∘ renvoyer les décisions D_A au module PEP (étape TX_D_A illustrée à la Fig. 6).

Ainsi, le système informatique SYS comprend :
- le module de gestion de la politique de sécurité PAP adapté pour :
   - pour chaque deuxième relation PA, définir une première liste L1 comprenant les données rôle eR du référentiel REF qui sont hiérarchiquement supérieures à la donnée rôle eR de la deuxième relation PA ;
   - pour chaque première relation UA, définir une deuxième liste L2 comprenant les données organisation eO du référentiel REF qui héritent de la donnée organisation eO de la première relation UA ;
   - définir une règle Rg qui associe la donnée permission eP de la deuxième liste L2 de ladite deuxième relation PA pour accéder audit service S à une donnée utilisateur eU si ladite donnée utilisateur eU est associée à une donnée rôle de la première liste L1 dans une quelconque des données organisation eO de la deuxième liste L2. On notera que le module PAP comprend un processeur PR1 pour effectuer les étapes mentionnées ci-dessus.
- le module d'émission de requêtes d'autorisation PEP adapté pour
   - recevoir une requête d'accès REQ_A à un service S, ladite requête d'accès REQ_A comprenant une donnée utilisateur eR, une donnée permission eP et une donnée rôle eR ;
   - transmettre ladite requête d'accès REQ_A au serveur d'autorisation PDP. On notera que le module PEP comprend un processeur PR2 pour effectuer les étapes mentionnées ci-dessus.
- le serveur d'autorisation PDP adapté pour :
   - pour chaque première relation UA de la donnée utilisateur eR de la requête d'accès REQ_A :
      - définir une troisième liste L3 comprenant les données organisation eO d'ordres hiérarchiques supérieures à la donnée organisation eO de ladite première relation UA ;
      - définir une quatrième liste L4 dans laquelle on associe la donnée rôle eR de ladite première relation UA à chaque donnée organisation eO de la troisième liste L3 ;
   - pour chaque règle Rg précédemment définie :
      - tester si la donnée rôle eR de la requête d'accès REQ_A appartient à la première liste L1 ; et
      - tester si la donnée organisation eO de la règle Rg appartient à la quatrième liste L4 ;
      - si l'un des deux tests est positif, autoriser l'accès audit service S.

On notera que le serveur PDP comprend un processeur PR3 pour effectuer les étapes mentionnées ci-dessus.

On notera que le terme serveur peut se référer à un poste de travail, à un ordinateur de bureau, à un ordinateur portable, à un ordinateur de poche, ou toute autre forme de dispositif informatique qui est capable de communiquer avec une base de données et qui a une puissance de processeur, une capacité mémoire et les capacités d'interface homme-machine suffisantes pour effectuer les fonctions décrites ci-après.

### • Expression du modèle RBAC hiérarchique étendu en langage XACML

Dans un mode de réalisation non limitatif, les règles de la politique de sécurité basées sur le modèle RBAC hiérarchique étendu, sont exprimées en langage XACML « *eXtensible Access Control Markup Language »* notamment en utilisant des expressions régulières Regexp. Comme on va le voir ci-après, la combinaison des deux hiérarchies (rôle et organisation) est exprimée grâce à ce langage.

On notera que la solution présentée ci-dessous est également intéressante pour du RBAC classique car elle permet d'organiser les politiques XACML de telle façon que les temps de prise de décision sont réduits.

Les expressions régulières Regexp sont utilisées pour trouver une suite de caractères correspondant à un modèle dans un texte. Plus précisément le terme Regexp désigne le modèle lui-même. Une expression Regexp peut contenir des notations qui valent pour toute une classe de caractères, par exemple les chiffres, les caractères majuscules etc.

Par exemple, l'expression Regexp « dupon » vaut pour la suite de caractères telle que. Les séquences « dupont », « dupond » et « Les duponts sont chez eux. » contiennent une séquence de caractères conforme à la regexp « dupon ». Mais « Dupont » ne répond pas au critère à cause de la majuscule en tête du nom.

Dans un mode de réalisation non limitatif, la syntaxe suivante est utilisée pour les expressions régulières.

Le caractère '|' désigne une alternative. Par exemple « dupont | dupond ». Pour faciliter la lecture des espaces ont été insérés de part et d'autre du caractère '|', mais dans la pratique il faut ne pas en mettre.

On peut utiliser des parenthèses pour grouper des suites de caractères. On aurait pu écrire la regexp ci-dessus « dupon(t | d) ».

Les caractères '*', '+' et '?' sont utilisés pour donner le nombre d'occurrence :
`*' pour répéter un nombre quelconque de fois, y inclus zéro fois ;
'+' au moins une fois (zéro exclus) ;
' ?' zéro ou une fois.

Les caractères '^' et '$' désignent respectivement le début et la fin du texte dans lequel on fait la recherche.

Le caractère '.' représente n'importe quel caractère.

Le caractère '\' est un caractère d'échappement qui change l'interprétation du caractère qui suit.

Bien entendu d'autres syntaxes d'expressions régulières peuvent être utilisées. Dans d'autres mode de réalisation, on pourrait utiliser des encodages plus structurés par exemple en utilisant des fragments XML ou RDF.

Comme on va le voir en détail ci-après, les rôles des utilisateurs (UA) sont encodés par des expressions régulières Regexp avec le chemin des organisations (les organisations sont les nœuds d'une arborescence, en décrivant le chemin qui mène de la racine à l'organisation on décrit indirectement les relations d'héritage). Les politiques qui représentent les PA incluent les relations des rôles et des organisations : on encode le chemin des organisations (comme pour les UA) et on donne la liste des rôles seniors.

Dans un premier temps, on explique ci-dessous comment on code une UA et une PA (sans relation de hiérarchie), dans un deuxième temps, comment on introduit la hiérarchie.

### ∘ Expression d'une UA et d'une PA

Les UA (premier lien rôle-utilisateur) pour un utilisateur correspondent aux valeurs d'un attribut ROLE de cet utilisateur. C'est un attribut multi-valué puisqu'un utilisateur a habituellement plusieurs rôles. Il est souhaitable d'avoir une syntaxe simple pour identifier les rôles car ils doivent être manipulés dans le gestionnaire d'identité qui est le module PAP.

Les PA (premier lien permission-rôle) vont être traduites en politiques XACML. Ces politiques décrivent les conditions sur les valeurs de l'attribut Role pour obtenir une Permission. Ces conditions vont être exprimées sous forme d'expressions régulières regexp.

Dans le cas du RBAC classique, l'attribut ROLE contient la liste des noms des rôles assignés à l'utilisateur. Les expressions Regexp dans les politiques XACML permettent d'effectuer une correspondance entre les noms des rôles assignés à une Permission et les noms des rôles de l'attribut Role de l'utilisateur.

Pour une PA avec le rôle « role » l'expression Regexp utilisée est « ^role$ ». On notera que les caractères '^' et '$' évitent de récupérer des faux termes positifs avec « rolex » ou « drole ».

Pour une PA avec les rôles « roleA » et « roleB » on peut regrouper les deux expression régulière regexp en une seule : « ^roleA$ | ^roleB$ » ou encore « ^(roleA | roleB)$ ». L'optimisation « ^role(A | B)$ » est également possible ici, mais pas dans notre propos.

### ∘ Expression d'un rôle hiérarchique

Le modèle RBAC hiérarchique ajoute au modèle RBAC classique la possibilité de composer un rôle à partir d'autres rôles comme vu précédemment.

Le codage de l'attribut ROLE des utilisateurs n'est pas modifié. Seuls les rôles auxquels un utilisateur a été explicitement assigné apparaissent dans la liste L1. Les rôles hérités n'ont pas besoin d'apparaître dans la liste L1. Le codage des expressions Regexp dans les politiques XACML est similaire au cas du RBAC classique, mais cette fois on inclut les rôles seniors. Ainsi, en se référant au graphe illustré Fig. 4, pour une permission assignée au rôle R12 on utilisera l'expression Regexp « ^(R1 | R5 | R8 | R12 | R2 | R9)$ » afin d'indiquer la hiérarchie.

On notera qu'il n'est pas possible de reconstituer la hiérarchie exacte à partir de l'expression regexp, mais ce n'est pas le but ici. En effet, l'expression Regexp est utilisée pour l'évaluation des droits et non pour l'administration des politiques.

### ∘ Expression d'une organisation

Les organisations sont différents nœuds d'une arborescence. Deux organisations peuvent avoir le même nom à condition d'être sous des nœuds différents comme décrit précédemment. Pour identifier une organisation on utilise donc un nom absolu, c'est à dire le chemin complet depuis la racine de l'arbre. Par exemple pour identifier l'organisation org123, on utilise l'expression Regexp « /sommet/org1/org12/org123 ».

### ∘ Expression d'une UA avec le chemin des organisations

Pour encoder l'attribut Role des utilisateurs on ajoute alors l'identificateur de l'organisation au nom du rôle avec le caractère '@' comme séparateur. Par exemple « R12@/sommet/org1/org12/org123 ».

Les politiques qui représentent les PA incluent les relations des rôles et des organisations : on encode le chemin des organisations (comme pour les UA) et on donne la liste des rôles seniors.

En reprenant l'exemple cité précédemment, on aura l'expression regexp correspondante aura la forme « ^(R1 | R5 | R8 | R12 | R2 | R9)@/sommet/org1/org12/org123$ ».

### ∘ Héritage d'une organisation (organisation hiérarchique)

Comme vu précédemment, l'héritage aux sous-organisations peut être activé pour les UA et/ou les PA.

### ▪ Héritage des UA pour les sous-organisations

L'héritage organisationnel des UA étant optionnel, on adopte une convention dans le nommage pour indiquer s'il est activé ou non.

Dans un exemple non limitatif, selon la convention, on ajoute les caractères '/*' en fin de séquence si l'héritage est activé dans la liste des rôles dans l'attribut Role de l'utilisateur. Par exemple
« R12@/sommet/org1/org12/org123/* ».

Il faut modifier les expressions Regexp pour accepter les organisations « /sommet/* », « /sommet/org1/* », « /sommet/org1/org12/* » et « /sommet/org1/org12/org123/* », au même titre que « /sommet/org1/org12/org123 ».

On notera que la sous-expression « /sommet(/org1 (/org12(/org123)?)?)?/\* » prend en compte ces nouveaux cas, et doit donc être acceptée comme alternative.

L'expression Regexp complète devient alors « ^( R1 | R5 | R8 | R12 | R2 | R9))@((/sommet/org1/org12/org123) | ( /sommet(/org1 (/org12(/org123)?)?)?Λ*))$ ».

Dans un mode de réalisation non limitatif, on peut mettre '/sommet' en facteur commun : « ^( R1 | R5 | R8 | R12 | R2 | R9)@/sommet((/org1/org12/org123) | ((/org1(/org12(/org123)?)?)?/\*))$ ». On notera que les politiques doivent être indépendantes de l'activation ou non de l'héritage sur certaines UA. Par conséquent la syntaxe ci-dessus est systématiquement mise en œuvre.

### ▪ Héritage des PA pour les sous-organisations

Concernant l'héritage organisationnel des PA, pour les sous-organisations on utilise le caractère '/' pour compléter la chaîne des organisations suivi de n'importe quelle autre expression.

La sous-expression suivante satisfait à ce besoin : « (/.*)? ».

L'exemple non limitatif décrit devient dans le cas d'héritage :
« ^( R1 | R5 | R8 | R12 | R2 | R9)@/sommet((/org1/org12/org123(/.*)?) | ((/org1(/org12(/org123)?)?)?Λ*))$ »
que l'on peut simplifier en :
« ^(R1 | R5 | R8 | R12 | R2 | R9)@/sommet((/org1/org12/org123(/.*)?) | ((/org1(/org12)?)?Λ*))$ » puisque l'expression regexp « (/.*)? » accepte la séquence '/*'.

En résumé, on utilise les caractères :
- * pour exprimer une expression régulière
- / pour séparer une organisation de ses sous-organisations
- @ pour séparer un rôle d'une organisation de l'UA.
- /* pour indiquer qu'une organisation hiérarchique est assignée à un utilisateur.

De manière générale, on notera que :
- les caractères '@', '/' et '*' ayant une signification particulière dans la syntaxe d'un rôle, il faut encoder ces caractères s'ils sont présents dans un nom de rôle ou d'organisation, dans un exemple non limitatif, en ajoutant le caractère espace '\'.
   Si ces caractères sont d'un usage courant dans les noms de rôle, il peut être judicieux de changer les conventions.
- Il faut ensuite adapter le résultat à l'espace de nommage utilisé par l'infrastructure de sécurité. Par exemple on peut utiliser des URI. Certains caractères devront être encodés dans cette transformation. Les rôles sont normalement exprimés sous forme d'URI. La syntaxe d'une URI interdit l'utilisation de certains caractères qui devront donc être encodés. Par exemple le caractère '*' sera remplacé par '%2A'.
- Si on veut utiliser des regexp pour tester les rôles il faut construire ces regexp en veillant au fait qu'il existe des caractères réservés qui doivent donc être précédés du caractère d'échappement (\) quand ils apparaissent dans les noms de rôles, c'est le cas par exemple pour le caractère '*'.

On notera que dans d'autres modes de réalisations non limitatifs, Il n'est pas obligatoire d'avoir recours à des regexp. On pourrait utiliser par exemple un modèle RDF « Resource Description Framework ».

### ∘ Exemple d'héritage d'une organisation

Si l'héritage d'une organisation est assigné à une PA, cette organisation et ses sous-organisations seront assignées à cette PA.

Par exemple, si le rôle-organisation employé@/Bull/Evidian est assigné à une permission PA avec l'héritage d'une organisation, alors l'utilisateur avec l'attribut rôle-organisation tel que employé@/Bull/Evidian/R&D ou employé@/Bull/Evidian/Marketing aura la permission en question PA.

Par exemple si l'héritage est assigné à une UA, alors l'utilisateur aura la permission (dont le rôle-organisation est employé@/Bull/Evidian) seulement si l'attribut rôle-organisation de l'utilisateur est employé@/Bull ou employé@/Bull/Evidian (mais pas si c'est employé@/Bull/Evidian/R&D).

### ∘ Exemple de création de la politique

Imaginons que l'organisation suivante est définie dans le serveur de gestion de la politique PAP.

L'entreprise BULL comprend deux sous-organisations :
- R&D
- Evidian, cette dernière comprenant elle-même deux sous-organisations Marketing et R&D.

Bob, un premier utilisateur a comme rôle le rôle employé dans l'organisation BULL avec un héritage de cette organisation. Cela signifie qu'il sera également considéré comme employé des sous-organisations de BULL. Son attribut Rôle-Organisation a comme expression régulière l'expression "employé@/Bull/*".

Marc, un deuxième utilisateur, a comme rôle, le rôle administrateur dans l'organisation Evidian sans aucun héritage d'organisation.

Son attribut Rôle-Organisation a comme expression régulière l'expression administrateur@/Bull/Evidian.

Il est également défini qu'un administrateur est un employé.

La ressource Document_Privé comprend les permissions Lecture et Ecriture.

La permission Lecture est assignée au Rôle-Organisation employé@/Bull/Evidian/Marketing sans aucun héritage d'organisation.

La permission Ecriture est assigné au Rôle-Organisation administrateur@/Bull avec l'héritage organisation.

Lors de la création de la politique, le module de transcription PST (décrit plus loin) récupère toutes ses données et crée un jeu de politiques POLSET pour cette ressource.

Document_Privé. Deux permissions lui sont associées. Ainsi, deux politiques vont être créées dans le jeu de politiques POLSET. La cible de la première politique sera «Lecture» et la cible de la seconde politique sera « Ecrire ». Les deux politiques auront comme règle « autorisé » mais avec des conditions différentes.

L'attribut de la condition de la règle de la première politique sera : ^(employé|administrateur)@(/Bull/Evidian/Marketing|/Bull(/Evidian(/Marketing )?)?Λ*)$.

Le rôle doit être employé ou administrateur et les organisations doivent être : /Bull/Evidian, /Bull/*, /Bull/Evidian/* ou /Bull/Evidian/Marketing/*.

Ainsi, seul l'attribut de Bob correspondra à ce rôle. En conséquence, seul Bob sera autorisé à lire la ressource Document_Privé.

L'attribut de la condition de la règle de la deuxième politique sera : ^(administrateur)@(/Bull(/.*)?|/Bull(/.*)?Λ*)$

Le role doit être administrateur et l'organisation doit commencer par /Bull mais peut être suivi de n'importe quoi.

Ainsi, seul Marc sera autorisé à écrire dans la ressource Document_Privé.

Ainsi, les listes L1, à L4 définies précédemment servent à la construction des regexp des règles Rg.

Par ailleurs, les règles Rg définies précédemment seront également exprimées sous la forme des expressions régulières.

Dans un mode de réalisation non limitatif, le module de gestion de la politique de sécurité PAP comprend un module de transcription PST des règles de la politique de sécurité en XACML.

On notera qu'avec cette architecture, la politique peut être exportée en dehors du module de gestion PAP utilisant un format standard XACML. Comme décrit précédemment, le serveur d'autorisation PDP récupère les règles de la politique de sécurité à partir du module PAP, et plus particulièrement il soumet une requête pour collecter la politique via un service web par exemple.

Le module de transcription PST répond à cette requête via un protocole de communication sécurisé, dans un exemple non limitatif SAML « Security assertion markup language » qui renvoie un élément appelé « assertion » comportant la représentation XACML de l'ensemble des règles de sécurité mises en place dans le module de gestion PAP.

Le module de transcription PST créé la représentation XACML de la politique et donc exprime les règles de la politique dans le langage XACML sous forme de jeu de politiques POLSET associé. Ainsi, pour chaque ressource du système informatique, un fichier XML comprenant un ensemble de règles POLSET associé à cette ressource est créé par le module de transcription PST.

La structure du fichier XACML est la suivante :
- Premier attribut cible ATTc1 = RESSc
   - Politique n°1 :
      ∘ Deuxième attribut cible ATTc2 : PAc1
      ∘ Règle RU1 :
         ▪ AUT=1
         ▪ Conditions CO1 :
            - UA
            - PA
            - Autres conditions dynamiques
   - Politique n°2 :
      ∘ ATTc2 : PAc2
      ∘ RU2 :
         ▪ AUT=1
         ▪ CO2 :
            • UA
            • PA
            • Autres conditions dynamiques
et ainsi de suite pour toutes les politiques associées à une ressource.

Ainsi, l'ensemble des règles ou jeu de politiques POLSET associé à une ressource comprend :
- une cible (premier attribut cible ATTc1) qui est la ressource. Le premier attribut cible ATTc1 est une expression régulière. C'est le nom de la ressource telle que définie dans le module de gestion PAP.
   Lorsque le serveur d'autorisation reçoit l'ensemble des règles POLSET, il compare cette expression régulière au nom de la ressource S qui se trouve dans la requête de demande d'accès envoyée par l'utilisateur. Dans un mode de réalisation non limitatif, ce premier attribut cible ATTc1 peut représenter également un groupe de ressource au lieu d'une unique ressource. Par exemple si l'on veut qu'un ensemble de fichiers de type gif aient la même politique d'accès on peut identifier une ressource qui comporte le nom « ^.*\.gif$ ».
- un ensemble de politiques associé. Une politique représente une permission eP (action) sur ladite ressource RESS. Il contient un deuxième attribut cible Attc2, qui est la permission, et un règlement RU.
   On notera que le deuxième attribut Attc2 est une simple chaîne de caractère. Donc pour chaque permission sur la ressource, une nouvelle politique doit être créée.
   Une règle RU comprend :
   - une autorisation AUT qui est toujours positive (ici sous forme de drapeau initialisé à un)
   - une condition CO applicable qui regroupe :
      ∘ les assignations des utilisateurs (lien utilisateur-rôle) UAc. Ces assignations sont définies sous forme d'une chaîne de caractère ;
      ∘ les assignations des rôle-organisation (lien rôle-organisation-permission) appelées également assignations des permissions PA. Ces assignations sont définies sous forme d'une expression régulière comme décrit plus haut ;
      ∘ les conditions dynamiques Cd. Par exemple, une condition peut être que la transaction doit être inférieure à 1000 euros.

Ainsi, lorsque le serveur d'autorisation PDP reçoit la requête de demande d'accès à une ressource, il effectue les étapes suivantes :
- il va recherche le fichier XML correspondant au paramètre ressource de la requête qui identifie la ressource à laquelle l'utilisateur source de la requête veut accéder. Ainsi, il compare le paramètre ressource S dans la requête qui identifie la ressource demandée au premier attribut cible ATTc1.
   Si le nom de la ressource se trouvant dans la requête de demande d'accès ne correspond pas à la chaine de caractère correspondant PAc, le serveur d'autorisation PDP envoie sa décision au module d'émission de requêtes d'autorisation PEP. Ce dernier affiche un message à l'utilisateur indiquant que la requête n'est pas autorisée. S'il trouve un fichier XML correspondant, il effectue l'étape suivante.
- il compare le paramètre permission ePr dans la requête qui identifie la permission demandée au deuxième attribut cible ATTc2.
   Si le nom de la permission se trouvant dans la requête de demande d'accès ne correspond pas à la chaine de caractères correspondant PAc, le serveur d'autorisation PDP envoie sa décision au module d'émission de requêtes d'autorisation PEP. Ce dernier affiche un message à l'utilisateur indiquant que la requête n'est pas autorisée. Sinon il effectue l'étape suivante.
- il compare le paramètre Ur dans la requête qui identifie le demandeur de la requête avec la chaîne de caractère UAc du règlement RU correspondant à la permission trouvée dans le fichier XML. S'il n'y a pas de correspondance, le serveur d'autorisation PDP envoie sa décision au module d'émission de requêtes d'autorisation PEP. Ce dernier affiche un message à l'utilisateur indiquant que la requête n'est pas autorisée. Sinon il effectue l'étape suivante.
- il compare le paramètre permission ePr dans la requête qui identifie la permission demandée à l'expression régulière correspondant PAr dans le fichier XML. Une expression régulière teste une correspondance avec une chaîne de caractères quelconque, et non pas avec une autre expression régulière. S'il n'y a pas de correspondance, le serveur d'autorisation PDP envoie sa décision au module d'émission de requêtes d'autorisation PEP. Ce dernier affiche un message à l'utilisateur indiquant que la requête n'est pas autorisée. Sinon il effectue l'étape suivante.
- Par la suite, il vérifie la condition applicable CO. Les règles et les politiques sont indépendantes. Si l'une d'entre elle est positive, alors l'accès est accordé. Sinon il est refusé.

On notera que la mise en œuvre des fonctions exposées ci-dessus peut être effectuée au moyen d'un dispositif micro programmé « software », d'une logique câblée et/ou de composants électroniques « hardware ».

Ainsi, les serveurs PAP ; PDP, PEP peuvent comporter un ou plusieurs produits programmes d'ordinateur comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en œuvre des fonctions décrites.

Un tel programme d'ordinateur peut être inscrit en mémoire non volatile inscriptible de type ROM ou en mémoire non volatile réinscriptible de type EEPROM ou FLASH. Ledit programme d'ordinateur peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 6, un premier programme d'ordinateur PG1 est inscrit dans une mémoire du microprocesseur MC du serveur de gestion de la politique de sécurité PAP. Un deuxième programme d'ordinateur PG2 est inscrit dans une mémoire du microprocesseur MC du serveur d'autorisation PDP. Un troisième programme d'ordinateur PG3 est inscrit dans une mémoire du microprocesseur MC du serveur d'émissions de requêtes d'autorisation PEP.

Ainsi, l'invention décrite présente notamment les avantages suivants :
- elle permet de mettre en œuvre une politique d'autorisation basée sur des associations groupes de permissions - utilisateurs via un de ses rôles et son organisation, politique dénommée RBAC ;
- elle permet d'encoder les relations d'héritage (des rôles et des organisations) dans les assignations ;
- elle permet d'encoder une UA sous la forme d'une chaîne de caractères, et donc simplifie l'encodage des attributs d'un utilisateur à l'aide d'un type simple ;
- elle est utilisable avec les moteurs XACML les plus répandus puisque l'évaluation repose sur une expression régulière ;
- elle permet une concision dans l'écriture des politiques qui permet de réduire le nombre de règles à évaluer.
- elle permet d'avoir un nombre de rôles inférieur au nombre d'utilisateurs en supportant le concept de RBAC étendu (rôles + organisations). Si on a 10 rôles et 10 organisations, il y a potentiellement 100 combinaisons role-organisation possibles.

## Revendications

1. Procédé de gestion d'un contrôle d'accès à un service (S) d'un système de gestion informatique (SYS), le procédé étant mis en œuvre à l'aide d'un référentiel (REF) comprenant :
- des données utilisateur (eU) ;
- des données rôle (eR) organisée selon une première hiérarchie (h1) ;
- des données permission (eP) pour accéder au service (S);
- des données organisation (eO) organisée selon une deuxième hiérarchie (h2) ;
- des données représentatives de :
▪ au moins une première relation (UA) dans laquelle une donnée utilisateur (eU) est associée à une donnée rôle (eR) dans une donnée organisation (eO) ;
▪ au moins une deuxième relation (PA) dans laquelle une donnée rôle (eR) est associée à une donnée permission (eP) et une donnée organisation (eO) ;
le procédé étant **caractérisé en ce qu'**il comprend les étapes de :
- pour chaque deuxième relation (PA), définir une première liste (L1) comprenant les données rôle (eR) du référentiel (REF) qui sont hiérarchiquement supérieures à la donnée rôle (eR) de la deuxième relation (PA), pour chaque deuxième relation (PA) une donnée rôle héritant de la permission d'une donnée rôle inférieure,
- pour chaque première relation (UA), définir une deuxième liste (L2) comprenant les données organisation (eO) du référentiel (REF) qui héritent de la donnée organisation (eO) de la première relation (UA) ;
- pour chaque couple de première relation (UA) et de deuxième relation (PA) ayant en commun une donnée rôle (eR) et une donnée organisation (eO), définir une règle (Rg) qui associe la donnée permission (eP) relative à la deuxième relation (PA) du couple considéré à une donnée utilisateur (eU) si ladite donnée utilisateur (eU) est associée à une donnée rôle de la première liste (L1) définie à partir de la deuxième relation (PA) du couple considéré et à une quelconque des données organisation (eO) de la deuxième liste (L2) définie à partir de la première relation (UA) du couple considéré ;
- recevoir une requête d'accès (REQ_A) à un service (S), ladite requête d'accès (REQ_A) comprenant une donnée utilisateur (eR), une donnée permission (eP) et une donnée rôle (eR) ;
- pour chaque première relation (UA) comprenant la donnée utilisateur (eR) de la requête d'accès (REQ_A) :
- définir une troisième liste (L3) comprenant les données organisation (eO) d'ordres hiérarchiques supérieures à la donnée organisation (eO) de ladite première relation (UA) ;
- définir une quatrième liste (L4) dans laquelle on associe la donnée rôle (eR) de ladite première relation (UA) à chaque donnée organisation (eO) de la troisième liste (L3) ;
- pour chaque règle (Rg) précédemment définie :
- tester si la donnée rôle (eR) de la requête d'accès (REQ_A) appartient à la première liste (L1) ; et
- tester si la donnée organisation (eO) de la règle (Rg) appartient à la quatrième liste (L4) ;
- si l'un des deux tests est positif, autoriser l'accès audit service (S).

2. Procédé selon la revendication 1, selon lequel il comporte en outre une étape supplémentaire de transcrire en un langage utilisant des expressions régulières (regexp) :
- les premières relations (UA) auxquelles sont assignées des organisations hiérarchiques ;
- les deuxièmes relations (PA) auxquelles sont assignées des organisations hiérarchiques ;
- un jeu de politiques associé à chaque service (S) du système de gestion informatique (SYS).

3. Procédé selon la revendication 2, selon lequel le langage de transcription utilisé est XACML.

4. Module de gestion de la politique de sécurité (PAP) d'un système de gestion informatique (SYS) mis en œuvre à l'aide d'un référentiel tel que défini selon le procédé selon l'une quelconque des revendications précédentes 1 à 3, ledit module comprenant un processeur (PR1) adapté pour :
- pour chaque deuxième relation (PA), définir une première liste (L1) comprenant les données rôle (eR) du référentiel (REF) qui sont hiérarchiquement supérieures à la donnée rôle (eR) de la deuxième relation (PA), pour chaque deuxième relation (PA) une donnée rôle héritant de la permission d'une donnée rôle inférieure,
- pour chaque première relation (UA), définir une deuxième liste (L2) comprenant les données organisation (eO) du référentiel (REF) qui héritent de la donnée organisation (eO) de la première relation (UA) ;
- pour chaque couple de première relation (UA) et de deuxième relation (PA) ayant en commun une donnée rôle (eR) et une donnée organisation (eO), définir une règle (Rg) qui associe la donnée permission (eP) relative à la deuxième relation (PA) du couple considéré à une donnée utilisateur (eU) si ladite donnée utilisateur (eU) est associée à une donnée rôle de la première liste (L1) définie à partir de la deuxième relation (PA) du couple considéré et à une quelconque des données organisation (eO) de la deuxième liste (L2) définie à partir de la première relation (UA) du couple considéré.

5. Serveur d'autorisation (PDP) d'un système de gestion informatique (SYS) mis en œuvre à l'aide d'un référentiel tel que défini selon le procédé selon l'une quelconque des revendications précédentes 1 à 3, ledit serveur comprenant un processeur (PR3) adapté pour :
- recevoir d'un module d'émission de requêtes d'autorisation (PEP) une requête d'accès (REQ_A) à un service (S), ladite requête d'accès (REQ_A) comprenant une donnée utilisateur (eR), une donnée permission (eP) et une donnée rôle (eR) ;
- pour chaque première relation (UA) comprenant la donnée utilisateur (eR) de la requête d'accès (REQ_A) :
- définir une troisième liste (L3) comprenant les données organisation (eO) d'ordres hiérarchiques supérieures à la donnée organisation (eO) de ladite première relation (UA) ;
- définir une quatrième liste (L4) dans laquelle on associe la donnée rôle (eR) de ladite première relation (UA) à chaque donnée organisation (eO) de la troisième liste (L3) ;
- pour chaque règle (Rg) précédemment définie :
- tester si la donnée rôle (eR) de la requête d'accès (REQ_A) appartient à la première liste (L1) ; et
- tester si la donnée organisation (eO) de la règle (Rg) appartient à la quatrième liste (L4) ;
- si l'un des deux tests est positif, autoriser l'accès audit service (S).

6. Système de gestion informatique (SYS) selon les revendications 4 et 5, ledit système de gestion informatique (SY) étant adapté pour coopérer avec un référentiel (REF) comprenant :
- des données utilisateur (eU) ;
- des données rôle (eR) organisée selon une première hiérarchie (h1) ;
- des données permission (eP) ;
- des données organisation (eO) organisée selon une deuxième hiérarchie (h2) ;
- des données représentatives de :
▪ au moins une première relation (UA) dans laquelle une donnée utilisateur (eU) est associée à une donnée rôle (eR) dans une donnée organisation (eO) ;
▪ au moins une deuxième relation (PA) dans laquelle une donnée rôle (eR) est associée à une donnée permission (eP) et une donnée organisation (eO) ;
ledit système de gestion informatique (SYS) étant **caractérisé en ce qu'**il comprend :
- un module de gestion de la politique de sécurité (PAP) adapté pour :
- pour chaque deuxième relation (PA), définir une première liste (L1) comprenant les données rôle (eR) du référentiel (REF) qui sont hiérarchiquement supérieures à la donnée rôle (eR) de la deuxième relation (PA), pour chaque deuxième relation (PA) une donnée rôle héritant de la permission d'une donnée rôle inférieure,
- pour chaque première relation (UA), définir une deuxième liste (L2) comprenant les données organisation (eO) du référentiel (REF) qui héritent de la donnée organisation (eO) de la première relation (UA) ;
- pour chaque couple de première relation (UA) et de deuxième relation (PA) ayant en commun une donnée rôle (eR) et une donnée organisation (eO), définir une règle (Rg) qui associe la donnée permission (eP) relative à la deuxième relation (PA) du couple considéré à une donnée utilisateur (eU) si ladite donnée utilisateur (eU) est associée à une donnée rôle de la première liste (L1) définie à partir de la deuxième relation (PA) du couple considéré et à une quelconque des données organisation (eO) de la deuxième liste (L2) définie à partir de la première relation (UA) du couple considéré ;
- un module d'émission de requêtes d'autorisation (PEP) adapté pour
- recevoir une requête d'accès (REQ_A) à un service (S), ladite requête d'accès (REQ_A) comprenant une donnée utilisateur (eR), une donnée permission (eP) et une donnée rôle (eR) ;
- transmettre ladite requête d'accès (REQ_A) à un serveur d'autorisation (PDP) ;
- un serveur d'autorisation (PDP) adapté pour :
- pour chaque première relation (UA) comprenant la donnée utilisateur (eR) de la requête d'accès (REQ_A) :
- définir une troisième liste (L3) comprenant les données organisation (eO) d'ordres hiérarchiques supérieures à la donnée organisation (eO) de ladite première relation (UA) ;
- définir une quatrième liste (L4) dans laquelle on associe la donnée rôle (eR) de ladite première relation (UA) à chaque donnée organisation (eO) de la troisième liste (L3) ;
- pour chaque règle (Rg) précédemment définie :
- tester si la donnée rôle (eR) de la requête d'accès (REQ_A) appartient à la première liste (L1) ; et
- tester si la donnée organisation (eO) de la règle (Rg) appartient à la quatrième liste (L4) ;
- si l'un des deux tests est positif, autoriser l'accès audit service (S).

7. Système selon la revendication précédente 4, selon lequel le module de gestion de la politique de sécurité (PAP) comprend en outre un module de transcription (PST) en un langage utilisant des expressions régulières (regexp):
- de premières relations (UA) auxquelles sont assignées des organisations hiérarchiques ;
- de deuxièmes relations (PA) auxquelles sont assignées des organisations hiérarchiques ;
- un jeu de politiques associé à chaque service (S) du système de gestion informatique (SYS).

## Patentansprüche

1. Verwaltungsverfahren einer Zugangskontrolle zu einem Dienst (S) eines Informatik-Verwaltungssystems (SYS), wobei das Verfahren mithilfe eines Bezugssystems (REF) umgesetzt wird, umfassend:
- Nutzerdaten (eU);
- Rollendaten (eR), die gemäß einer ersten Hierarchie organisiert werden,
- Erlaubnisdaten (eP) zum Zugreifen auf den Dienst (S);
- Organisationsdaten (eO), die gemäß einer zweiten Hierarchie (h2) organisiert werden;
- Daten, die darstellen:
▪ wenigstens eine erste Relation (UA), in der ein Nutzer-Datenelement (eU) einem Rollen-Datenelement (eR) in einem Organisations-Datenelement (eO) zugeordnet wird;
▪ wenigstens eine zweite Relation (PA), in der ein Rollen-Datenelement (eR) einem Erlaubnis-Datenelement (eP) und einem Organisations-Datenelement (eO) zugeordnet wird;
wobei das Verfahren **dadurch gekennzeichnet ist, dass** es die Schritte umfasst:
- für jede zweite Relation (PA) Definieren einer ersten Liste (L1), umfassend die Rollendaten (eR) des Bezugssystems (REF), die hierarchisch höher sind als das Rollen-Datenelement (eR) der zweiten Relation (PA), wobei ein Rollen-Datenelement für jede zweite Relation (PA) die Erlaubnis eines niedrigeren Rollen-Datenelements erbt,
- für jede erste Relation (UA) Definieren einer zweiten Liste (L2), umfassend die Organisationsdaten (eO) des Bezugssystems (REF), die das Organisations-Datenelement (eO) der ersten Relation (UA) erben;
- für jedes Paar der ersten Relation (UA) und der zweiten Relation (PA), die ein Rollen-Datenelement (eR) und ein Organisations-Datenelement (eO) gemeinsam haben, Definieren einer Regel (Rg), die das Erlaubnis-Datenelement (eP) in Bezug zur zweiten Relation (PA) des betrachteten Paars zu einem Nutzer-Datenelement (eU) zuordnet, wenn das genannte Nutzer-Datenelement (eU) einem Rollen-Datenelement der ersten Liste, die ausgehend von der zweiten Relation (PA) des betrachteten Paars definiert wird, und zu beliebigen Organisationsdaten (eO) der zweiten Liste (L2), die ausgehend von der ersten Relation (UA) des betrachteten Paars definiert wird, zugeordnet wird;
- Empfangen einer Zugriffsanfrage (REQ_A) zu einem Dienst (S), wobei die genannte Zugriffsanfrage (REQ_A) ein Nutzer-Datenelement (eR), ein Erlaubnis-Datenelement (eP) und ein Rollen-Datenelement (eR) umfasst;
- für jede erste Relation (UA), die das Nutzer-Datenelement (eR) der Zugriffsanfrage (REQ_A) umfasst:
- Definieren einer dritten Liste (L3), umfassend die Organisationsdaten (eO) höherer hierarchischer Ordnungen als das Organisations-Datenelement (eO) der genannten ersten Relation (UA);
- Definieren einer vierten Liste (L4), in der das Rollen-Datenelement (eR) der genannten ersten Relation (UA) jedem Organisations-Datenelement (eO) der dritten Liste (L3) zugeordnet wird;
- für jede zuvor definierte Regel (Rg):
- Testen, ob das Rollen-Datenelement (eR) der Zugriffsanfrage (REQ_A) zur ersten Liste (L1) gehört; und
- Testen, ob das Organisations-Datenelement (eO) der Regel (Rg) zur vierten Liste (L4) gehört;
- wenn einer der zwei Tests positiv ist, Zulassen des Zugriffs auf den genannten Dienst (S).

2. Verfahren gemäß Anspruch 1, gemäß dem es darüber hinaus einen zusätzlichen Transkriptionsschritt in eine Sprache umfasst, die regelmäßige Ausdrücke (regexp) verwendet:
- die ersten Relationen (UA), denen hierarchische Organisationen zugeordnet werden;
- die zweiten Relationen (PA), denen hierarchische Organisationen zugeordnet werden;
- einen Satz Politiken, der jedem Dienst (S) des Informatik-Verwaltungssystems (SYS) zugeordnet wird.

3. Verfahren gemäß Anspruch 2, gemäß dem die verwendete Transkriptionssprache XACML ist.

4. Verwaltungsmodul der Sicherheitspolitik (PAP) eines Informatik-Verwaltungssystems (SYS), das mithilfe eines Bezugssystems wie z. B. gemäß Definition nach dem Verfahren gemäß irgendeinem der voranstehenden Ansprüche 1 bis 3 umgesetzt wird, wobei das genannte Modul einen Prozessor (PR1) umfasst, der geeignet ist zum:
- für jede zweite Relation (PA) Definieren einer ersten Liste (L1), umfassend die Rollendaten (eR) des Bezugssystems (REF), die hierarchisch höher sind als das Rollen-Datenelement (eR) der zweiten Relation (PA), wobei für jede zweite Relation (PA) ein Rollen-Datenelement die Erlaubnis eines niedrigeren Rollen-Datenelements erbt,
- für jede erste Relation (UA) Definieren einer zweiten Liste (L2), umfassend die Organisationsdaten (eO) des Bezugssystems (REF), die das Organisations-Datenelement (eO) von der ersten Relation (UA) erben;
- für jedes Paar der ersten Relation (UA) und der zweiten Relation (PA), die ein Rollen-Datenelement (eR) und ein Organisations-Datenelement (eO) gemeinsam haben, Definieren einer Regel (Rg), die das Erlaubnis-Datenelement (eP) in Bezug zur zweiten Relation (PA) des betrachteten Paars einem Nutzer-Datenelement (eU) zuordnet, wenn das genannte Nutzer-Datenelement (eU) einem Rollen-Datenelement der ersten Liste (L1), die ausgehend von der zweiten Relation (PA) des betrachteten Paars definiert ist, und irgendeinem der Organisationsdaten (eO) der zweiten Liste (L2), die ausgehend von der ersten Relation (UA) des betrachteten Paars definiert ist, zugeordnet ist.

5. Zulassungsserver (PDP) eines Informatik-Verwaltungssystems (SYS), das mithilfe eines Bezugssystems gemäß Definition nach dem Verfahren gemäß irgendeinem der voranstehenden Ansprüche 1 bis 3 umgesetzt ist, wobei der genannte Server einen Prozessor (PR3) umfasst, der geeignet ist, zum:
- Empfangen eines Sendemoduls von Zulassungsanfragen (PEP) einer Zugriffsanfrage (REQ_A) zu einem Dienst (S), wobei die genannte Zugriffsanfrage (REQ_A) ein Nutzer-Datenelement (eR), ein Erlaubnis-Datenelement (eP) und ein Rollen-Datenelement (eR) umfasst;
- für jede erste Relation (UA), die das Nutzer-Datenelement (eR) der Zugriffsanfrage (REQ_A) umfasst:
- Definieren einer dritten Liste (L3), umfassend die Organisationsdaten (eO) höherer hierarchischer Ordnungen als das Organisations-Datenelement (eO) der genannten ersten Relation (UA);
- Definieren einer vierten Liste (L4), in der das Rollen-Datenelement (eR) der genannten ersten Relation (UA) jedem Organisations-Datenelement (eO) der dritten Liste (L3) zugeordnet ist;
- für jede zuvor definierte Regel (Rg):
- Testen, ob das Rollen-Datenelement (eR) der Zugriffsanfrage (REQ_A) zur ersten Liste (L1) gehört; und
- Testen, ob das Organisations-Datenelement (eO) der Regel (Rg) zur vierten Liste (L4) gehört;
- wenn einer der zwei Tests positiv ist, Zulassen des Zugriffs auf den genannten Dienst (S).

6. Informatik-Verwaltungssystem (SYS) gemäß den Ansprüchen 4 und 5, wobei das genannte Informatik-Verwaltungssystem (SY) geeignet ist, um mit einem Bezugssystem (REF) zusammenzuwirken, umfassend:
- Nutzerdaten (eU);
- Rollendaten (eR), die gemäß einer ersten Hierarchie (h1) organisiert sind;
- Erlaubnisdaten (eP);
- Organisationsdaten (eO), die gemäß einer zweiten Hierarchie (h2) organisiert sind;
- Daten, die darstellen:
▪ wenigstens eine erste Relation (UA), in der ein Nutzer-Datenelement (eU) einem Rollen-Datenelement (eR) in einem Organisations-Datenelement (eO) zugeordnet ist;
▪ wenigstens eine zweite Relation (PA), in der ein Rollen-Datenelement (eR) einem Erlaubnis-Datenelement (eP) und einem Organisations-Datenelement (eO) zugeordnet ist;
wobei das genannte Informatik-Verwaltungssystem (SYS) **dadurch gekennzeichnet ist, dass** es umfasst:
- ein Verwaltungsmodul der Sicherheitspolitik (PAP), das geeignet ist, um:
- für jede zweite Relation (PA) eine erste Liste (L1) zu definieren, umfassend die Rollendaten (eR) des Bezugssystems (REF), die hierarchisch höher sind als das Rollen-Datenelement (eR) der zweiten Relation (PA), wobei für jede zweite Relation (PA) ein Rollen-Datenelement die Erlaubnis eines niedrigeren Rollen-Datenelements erbt,
- für jede erste Relation (UA) eine zweite Liste (L2) zu definieren, umfassend die Organisationsdaten (eO) des Bezugssystems (REF), die das Organisations-Datenelement (eO) von der ersten Relation (UA) erben;
- für jedes Paar der ersten Relation (UA) und der zweiten Relation (PA), die ein Rollen-Datenelement (eR) und ein Organisations-Datenelement (eO) gemeinsam haben, eine Regel (Rg) zu definieren, die das Erlaubnis-Datenelement (eP) in Bezug zur zweiten Relation (PA) des betrachteten Paars einem Nutzer-Datenelement (eU) zuordnet, wenn das genannte Nutzer-Datenelement (eU) einem Rollen-Datenelement der ersten Liste (L1), die ausgehend von der zweiten Relation (PA) des betrachteten Paars definiert ist, und irgendeinem der Organisationsdaten (eO) der zweiten Liste (L2), die ausgehend von der ersten Relation (UA) des betrachteten Paars definiert ist, zugeordnet ist;
- ein Sendemodul von Zulassungsanfragen (PEP), das geeignet ist, zum:
- Empfangen einer Zugriffsanfrage (REQ_A) zu einem Dienst (S), wobei die genannte Zugriffsanfrage (REQ_A) ein Nutzer-Datenelement (eR), ein Erlaubnis-Datenelement (eP) und ein Rollen-Datenelement (eR) umfasst;
- Weiterleiten der genannten Zugriffsanfrage (REQ_A) an einen Zulassungsserver (PDP);
- einen Zulassungsserver (PDP), der geeignet ist zum:
- für jede erste Relation (UA), umfassend das Nutzerdatenelement (eR) der Zugriffsanfrage (REQ_A):
- Definieren einer dritten Liste (L3), umfassend die Organisationsdaten (eO) höherer hierarchischer Ordnungen als das Organisations-Datenelement (eO) der genannten ersten Relation (UA);
- Definieren einer vierten Liste (L4), in der das Rollen-Datenelement (eR) der genannten ersten Relation (UA) jedem Organisations-Datenelement (eO) der dritten Liste (L3) zugeordnet ist;
- für jede zuvor definierte Regel (Rg):
- Testen, ob das Rollen-Datenelement (eR) der Zugriffsanfrage (REQ_A) zur ersten Liste (L1) gehört; und
- Testen, ob das Organisations-Datenelement (eO) der Regel (Rg) zur vierten Liste (L4) gehört;
- wenn einer der zwei Tests positiv ist, Zulassen des Zugriffs auf den genannten Dienst (S).

7. System gemäß dem voranstehenden Anspruch 4, gemäß dem das Verwaltungsmodul der Sicherheitspolitik (PAP) darüber hinaus ein Transkriptionsmodul (PST) in eine Sprache umfasst, die regelmäßige Ausdrücke (regexp) verwendet:
- erste Relationen (UA), denen hierarchische Organisationen zugeordnet sind;
- zweite Relationen (UA), denen hierarchische Organisationen zugeordnet sind;
- einen Satz Politiken, der jedem Dienst (S) des Informatik-Verwaltungssystems (SYS) zugeordnet ist.

## Claims

1. Method for managing access control to a service (S) of a computer management system (SYS), the method being implemented using a repository (REF) comprising:
- user data (eU);
- role data (eR) organised into a first hierarchy (h1);
- permission data (eP) to access the service (S);
- organisation data (eO) organised into a second hierarchy (h2);
- data representative of:
∘ at least one first relationship (UA) in which an item of user data (eU) is associated with an item of role data (eR) in an item of organisation data (eO);
∘ at least one second relationship (PA) in which an item of role data (eR) is associated with an item of permission data (eP) and an item of organisation data (eO);
the method being **characterised in that** it comprises the steps of:
- for each second relationship (PA), defining a first list (L1) comprising the role data (eR) of the repository (REF) that are hierarchically higher than the role data (eR) of the second relationship (PA), for each second relationship (PA) an item of role data that inherits the permission of a lower item of role data,
- for each first relationship (UA), defining a second list (L2) comprising the organisation data (eO) of the repository (REF) that inherit the organisation data (eO) of the first relationship (UA);
- for each first relationship (UA) and second relationship (PA) pair having in common an item of role data (eR) and an item of organisation data (eO), defining a rule (Rg) that associates the permission data (eP) concerning the second relationship (PA) of the pair considered with an item of user data (eU) if said user data (eU) is associated with an item of role data from the first list (L1) defined from the second relationship (PA) of the pair considered and with any item of organisation data (eO) of the second list (L2) defined from the first relationship (UA) of the pair considered;
- receiving a request to access (REQ_A) a service (S), said access request (REQ_A) comprising an item of user data (eR), an item of permission data (eP) and an item of role data (eR);
- for each first relationship (UA) comprising the item of user data (eR) of the access request (REQ_A):
- defining a third list (L3) comprising the organisation data (eO) of hierarchical orders higher than the organisation data (eO) of said first relationship (UA);
- defining a fourth list (L4) in which the role data (eR) of said first relationship (UA) is associated with each item of organisation data (eO) of the third list (L3);
- for each previously defined rule (Rg):
- testing if the role data (eR) of the access request (REQ_A) belongs to the first list (L1): and
- testing if the organisation data (eO) of the rule (Rg) belongs to the fourth list (L4);
- if one of the two tests is positive, authorising access to said service (S).

2. Method according to claim 1, according to which it further comprises an additional step of transcribing into a language that uses regular expressions (regexp):
- the first relationships (UA) to which hierarchical organisations are assigned;
- the second relationships (PA) to which hierarchical organisations are assigned;
- a set of policies associated with each service (S) of the computer management system (SYS).

3. Method according to claim 2, according to which the transcription language used is XACML.

4. Security policy management module (PAP) of a computer management system (SYS) implemented using a repository such as defined according to the method according to any preceding claim 1 to 3, said module comprising a processor (PR1) suitable for:
- for each second relationship (PA), defining a first list (L1) comprising the role data (eR) of the repository (REF) that are hierarchically higher than the role data (eR) of the second relationship (PA), for each second relationship (PA) an item of role data that inherits the permission of a lower item of role data,
- for each first relationship (UA), defining a second list (L2) comprising the organisation data (eO) of the repository (REF) that inherit the organisation data (eO) of the first relationship (UA);
- for each first relationship (UA) and second relationship (PA) pair having in common an item of role data (eR) and an item of organisation data (eO), defining a rule (Rg) that associates the permission data (eP) concerning the second relationship (PA) of the pair considered with an item of user data (eU) if said user data (eU) is associated with an item of role data from the first list (L1) defined from the second relationship (PA) of the pair considered and with any item of organisation data (eO) of the second list (L2) defined from the first relationship (UA) of the pair considered.

5. Authorisation server (POP) of a computer management system (SYS) implemented using a repository such as defined according to the method according to any preceding claim 1 to 3, said server comprising a processor (PR3) suitable for:
- receiving from an authorisation request emission module (PEP) a request to access (REQ_A) a service (S), said access request (REQ_A) comprising an item of user data (eR), an item of permission data (eP) and an item of role data (eR);
- for each first relationship (UA) comprising the item of user data (eR) of the access request (REQ_A):
- defining a third list (L3) comprising the organisation data (eO) of hierarchical orders higher than the organisation data (eO) of said first relationship (UA);
- defining a fourth list (L4) in which the role data (eR) of said first relationship (UA) is associated with each item of organisation data (eO) of the third list (L3);
- for each previously defined rule (Rg):
- testing if the role data (eR) of the access request (REQ_A) belongs to the first list (L1); and
- testing if the organisation data (eO) of the rule (Rg) belongs to the fourth list (L4);
- if one of the two tests is positive, authorising access to said service (S).

6. Computer management system (SYS) according to claims 4 and 5, said computer management system (SY) being suitable for cooperating with a repository (REF) comprising:
- user data (eU);
- role data (eR) organised into a first hierarchy (h1);
- permission data (eP);
- organisation data (eO) organised into a second hierarchy (h2);
- data representative of:
∘ at least one first relationship (UA) in which an item of user data (eU) is associated with an item of role data (eR) in an item of organisation data (eO);
∘ at least one second relationship (PA) in which an item of role data (eR) is associated with an item of permission data (eP) and an item of organisation data (eO);
said computer management system (SYS) being **characterised in that** it comprises
- a security policy management module (PAP) suitable for:
- for each second relationship (PA), defining a first list (L1) comprising the role data (eR) of the repository (REF) that are hierarchically higher than the role data (eR) of the second relationship (PA), for each second relationship (PA) an item of role data that inherits the permission of a lower item of role data,
- for each first relationship (UA), defining a second list (L2) comprising the organisation data (eO) of the repository (REF) that inherit the organisation data (eO) of the first relationship (UA);
- for each first relationship (UA) and second relationship (PA) pair having in common an item of role data (eR) and an item of organisation data (eO), defining a rule (Rg) that associates the permission data (eP) concerning the second relationship (PA) of the pair considered with an item of user data (eU) if said user data (eU) is associated with an item of role data from the first list (L1) defined from the second relationship (PA) of the pair considered and with any item of organisation data (eO) of the second list (L2) defined from the first relationship (UA) of the pair considered;
- an authorisation request emission module (PEP) suitable for
- receiving a request to access (REQ_A) a service (S), said access request (REQ_A) comprising an item of user data (eR), an item of permission data (eP) and an item of role data (eR);
- transmitting said access request (REQ_A) to an authorisation server (POP);
- an authorisation server (POP) suitable for:
- for each first relationship (UA) comprising the item of user data (eR) of the access request (REQ_A):
- defining a third list (L3) comprising the organisation data (eO) of hierarchical orders higher than the organisation data (eO) of said first relationship (UA);
- defining a fourth list (L4) in which the role data (eR) of said first relationship (UA) is associated with each item of organisation data (eO) of the third list (L3);
- for each previously defined rule (Rg):
- testing if the role data (eR) of the access request (REQ_A) belongs to the first list (L 1); and
- testing if the organisation data (eO) of the rule (Rg) belongs to the fourth list (L4);
- if one of the two tests is positive, authorising access to said service (S).

7. System according to the preceding claim 4, according to which the security policy management module (PAP) further comprises a transcription module (PST) into a language that uses regular expressions (regexp):
- the first relationships (UA) to which hierarchical organisations are assigned;
- the second relationships (PA) to which hierarchical organisations are assigned;
- a set of policies associated with each service (S) of the computer management system (SYS).
